# EUROPEAN PATENT SPECIFICATION

(11) **EP 3 553 100 B1**
(45) Date of publication and mention of the grant of the patent: **15.11.2023**
(21) Application number: 17878626.5
(22) Date of filing: 21.11.2017
(51) Int. Cl.: C08F 290/00, B29C 39/10, B29C 39/24, C08J 5/04, C08K 7/06, C08L 101/00, C08K 3/04

(54) **RESIN COMPOSITION FOR VARTM MOLDING, MOLDING MATERIAL, MOLDED ARTICLE AND METHOD FOR PRODUCING MOLDED ARTICLE**
HARZZUSAMMENSETZUNG ZUR VARTM-FORMUNG, FORMUNGSMATERIAL, FORMARTIKEL UND VERFAHREN ZUR HERSTELLUNG EINES FORMARTIKELS
COMPOSITION DE RÉSINE POUR MOULAGE CARTE, MATÉRIAU DE MOULAGE, ARTICLE LE MOULÉ ET PROCÉDÉ DE PRODUCTION D'UN ARTICLE MOULÉ

(30) Priority: 07.12.2016 JP 2016237537
(43) Date of publication of application: 16.10.2019
(73) Proprietor: DIC Corporation, Tokyo 174-8520 (JP)
(72) Inventor: TOMOKUNI Hidehiko, Takaishi-shi Osaka 592-0001 (JP); OSUMI Shigeaki, Takaishi-shi Osaka 592-0001 (JP)
(74) Representative: Beckmann, Claus
(86) International application number: PCT/JP2017/041791
(87) International publication number: WO 2018/105380

(56) References cited:
- EP-A1- 3 395 869
- WO-A1-2015/125875
- WO-A1-2016/022751
- JP-A- 2005 179 388
- JP-A- 2013 053 266
- JP-A- 2013 100 562
- JP-A- 2015 157 369
- US-A1- 2009 048 422

## Description

### Technical Field

The present invention relates to a resin composition for VaRTM, from which a molded article having excellent appearance and various physical properties, such as a flexural strength, can be obtained, a molding material, a molded article, and a method for producing a molded article.

### Background Art

A CFRP (carbon fiber-reinforced plastic) is a high performance material that can be designed to be lightweight and to have high strength and high stiffness and has excellent electrical properties and corrosion resistance, as compared to general structural metal materials. Accordingly, in recent years, the employment of the CFRP as a material substitute for metal materials is expanding in aerospace and aircraft structures, structural members for automobile and two-wheeled vehicle, large-sized industrial mechanical parts, sports goods, and the like. Among these, the application of the CFRP to automotive members is vigorously made in an attempt to achieve low fuel consumption and to reduce a burden on the environment.

As a method for molding the CFRP, autoclave molding using a prepreg has been employed, but, when using the autoclave molding, in view of the productivity and the cost for energy, it has been difficult to apply the CFRP to the use as automotive members. For overcoming such difficulty, the development of a technique for mass production of molded articles from the CFRP by VaRTM (vacuum assisted resin transfer molding) having higher productivity than that of the autoclave molding is being made.

VaRTM is a molding method in which a fiber reinforcing material is preliminarily shaped in a mold and, after mold closing, a liquid resin is injected into the mold under a reduced pressure, and the fiber reinforcing material is impregnated with the matrix resin within the mold, followed by curing. However, when a conventional epoxy resin is used as the liquid resin, the viscosity of the resin is so high that it is difficult to reduce the injection or impregnation time or curing time of the resin, making it difficult to increase the cycle of molding.

For solving the problem, the development of a molding material which can be designed to have a lower viscosity and faster-curing properties than those of an epoxy resin is made (see, for example, PTL 1). However, the molding material using this urethane (meth)acrylate resin has a problem in that foaming occurs in the heated mold due to a diluent having a low boiling point, so that a blister is caused in the molded article. Therefore, there has been desired a material which has excellent moldability even under heating and reduced-pressure conditions indispensable to fast-curing so that a molded article having excellent appearance and mechanical strength can be obtained.

WO 2015/125875 A1 describes a method for producing a fiber-reinforced resin composite material which comprises a step in which a composition for producing a fiber-reinforced resin composite material, which includes a reinforcing fiber material and a resin composition containing a radical reactive resin having at least one polymerizable unsaturated double bond, is cured by exposure to ionizing radiation.

### Citation List

### Patent Literature

PTL 1: JP-A-2016-29133

### Summary of Invention

### Technical Problem

A task to be achieved by the present invention is to provide a resin composition for VaRTM, which is advantageous not only in that the productivity for a molded article is excellent, but also in that a molded article having excellent appearance and various physical properties, such as a flexural strength, can be obtained from the resin composition, a molding material, a molded article, and a method for producing a molded article.

### Solution to Problem

The present inventors have found that the resin composition for VaRTM containing a radically curable resin, an unsaturated monomer having a boiling point of 200°C or higher under atmospheric pressure, and a polymerization initiator as defined in claim 1 is advantageous not only in that the productivity for a molded article is excellent, but also in that a molded article having excellent appearance and various physical properties, such as a flexural strength, can be obtained from the resin composition, and the present invention has been completed.

Specifically, the present invention is directed to a resin composition for VaRTM, which includes a radically curable resin (A), an unsaturated monomer (B) having a boiling point of 200°C or higher under atmospheric pressure, and a polymerization initiator (C), wherein the mass ratio (A)/(B) of the radically curable resin (A) to the unsaturated monomer (B) is in the range of 30/70 to 70/30, wherein the resin composition has a viscosity at 25°C in the range of 30 to 2,000 mPa•s, and wherein the unsaturated monomer (B) is phenoxyethyl methacrylate and/or benzyl methacrylate.

### Advantageous Effects of Invention

The molded article obtained from the resin composition for VaRTM of the invention has excellent appearance, flexural strength, flexural modulus and the like, and therefore can be advantageously used in automotive members, railway rolling stock members, aerospace and aircraft members, vessel members, house building members, sports goods members, vehicle members, construction and civil engineering members, and housings for OA machines and the like.

### Description of Embodiments

The resin composition for VaRTM of the invention includes a radically curable resin (A), an unsaturated monomer (B) having a boiling point of 200°C or higher under atmospheric pressure, and a polymerization initiator (C) as defined in claim 1.

As the radically curable resin (A), there can be mentioned epoxy (meth)acrylate, urethane (meth)acrylate, polyester (meth)acrylate, and an unsaturated polyester resin, but epoxy (meth)acrylate is preferred in view of more easily designing the resin composition to have a low viscosity.

In the present invention, "(meth)acrylate" refers to any one of or both of acrylate and methacrylate, and "(meth)acrylic acid" refers to any one of or both of acrylic acid and methacrylic acid.

The epoxy (meth)acrylate is obtained by, for example, reacting an epoxy resin and (meth)acrylic acid with each other.

Examples of the epoxy resins include bisphenol epoxy resins, such as a bisphenol A epoxy resin, a bisphenol F epoxy resin, a bisphenol fluorene epoxy resin, and a biscresol fluorene type; novolak epoxy resins, such as a phenolic novolak epoxy resin and a cresol novolak epoxy resin; oxazolidone-modified epoxy resins; glycidyl ethers of phenol, such as brominated epoxy resins of the above resins; glycidyl ethers of a polyhydric alcohol, such as dipropylene glycol diglycidyl ether, trimethylolpropane triglycidyl ether, a diglycidyl ether of an alkylene oxide addition product of bisphenol A, and a diglycidyl ether of hydrogenated bisphenol A; alicyclic epoxy resins, such as 3,4-epoxy-6-methylcyclohexylmethyl-3,4-epoxy-6-methylcyclohexanecarboxylate and 1-epoxyethyl-3,4-epoxycyclohexane; glycidyl esters, such as diglycidyl phthalate, diglycidyl tetrahydrophthalate, diglycidyl p-oxybenzoate, and dimer acid glycidyl ester; glycidylamines, such as tetraglycidyldiaminodiphenylmethane, tetraglycidyl-m-xylenediamine, triglycidyl-p-aminophenol, and N,N-diglycidylaniline; and heterocyclic epoxy resins, such as 1,3-diglycidyl-5,5-dimethylhydantoin and triglycidyl isocyanurate. Of these, preferred are difunctional aromatic epoxy resins because the strength of the resultant molded article and the handling properties of the resultant molding material as well as the fluidity of the molding material being molded are more excellent, and more preferred are a bisphenol A epoxy resin and a bisphenol F epoxy resin. These epoxy resins can be used individually or in combination.

The above-mentioned reaction of an epoxy resin and (meth)acrylic acid is preferably conducted using an esterification catalyst at 60 to 140°C. Further, a polymerization inhibitor or the like can be used.

It is important that the unsaturated monomer (B) has a boiling point of 200°C or higher under atmospheric pressure. By virtue of this, the molding material of the invention has excellent moldability even under conditions such that the mold is heated, which are required for fast-curing, enabling an increase of the cycle of VaRTM, so that the productivity is improved.

The unsaturated monomer (B) is, in view of obtaining a molded article having higher strength, benzyl methacrylate and/or phenoxyethyl methacrylate. These unsaturated monomers can be used individually or in combination.

In view of further improving the balance between the impregnation properties of a carbon fiber with the resin, the curing properties, and the mechanical properties of the resultant molded article, the mass ratio ((A)/(B)) of the radically curable resin (A) to the unsaturated monomer (B) is in the range of 30/70 to 70/30, preferably in the range of 40/60 to 60/40.

With respect to the polymerization initiator (C), there is no particular limitation, but organic peroxides are preferred, and examples include a diacyl peroxide compound, a peroxyester compound, a hydroperoxide compound, a ketone peroxide compound, an alkyl perester compound, a percarbonate compound, and a peroxyketal, and a polymerization initiator can be appropriately selected according to the molding conditions. These polymerization initiators (C) can be used individually or in combination.

Further, among these, a polymerization initiator having a temperature of 70 to 110°C at which a 10 hour half-life is obtained is preferably used. When this temperature of the polymerization initiator is 70 to 110°C, the fiber-reinforced molding material advantageously has a prolonged life at room temperature, and further can be cured in a short time by heating, achieving more excellent balance between the curing properties and the moldability. Examples of such polymerization initiators include 1,6-bis(t-butylperoxycarbonyloxy)hexane, 1,1-bis(t-butylperoxy)cyclohexane, 1,1-bis(t-amylperoxy)cyclohexane, 1,1-bis(t-hexylperoxy)cyclohexane, t-butyl peroxy-2-ethylhexanoate, t-butyl peroxydiethylacetate, t-butyl peroxyisopropyl carbonate, t-amyl peroxyisopropyl carbonate, t-hexyl peroxyisopropyl carbonate, di-t-butyl peroxyhexahydroterephthalate, t-amyl peroxytrimethylhexanoate, t-amyl peroxy-2-ethylhexanoate, t-butyl peroxy-3,5,5-trimethylhexanoate, t-butyl peroxy-benzoate, di-(4-t-butylcyclohexyl)-peroxydicarbonate, methyl ethyl ketone peroxide, acetylacetone peroxide, cumene hydroperoxide, and benzoyl peroxide.

In view of achieving both excellent curing properties and excellent storage stability, the amount of the polymerization initiator (C) contained is preferably in the range of 0.3 to 3% by mass, based on the total mass of the radically curable resin (A) and the unsaturated monomer (B).

With respect to the components of the resin composition for VaRTM of the invention, a component other than the radically curable resin (A), the unsaturated monomer (B), and the polymerization initiator (C) may be used, and, for example, a thermosetting resin other than the radically curable resin (A), a thermoplastic resin, a polymerization inhibitor, a curing accelerator, a filler, a low profile additive, a release agent, a thickener, a thinner, a pigment, an antioxidant, a plasticizer, a flame retardant, an anti-fungus agent, an ultraviolet light stabilizer, a reinforcement, a photocuring agent, or the like can be contained in the resin composition.

Examples of the thermosetting resins include an acrylic resin, an epoxy resin, a phenolic resin, a melamine resin, and a furan resin. Further, these thermosetting resins can be used individually or in combination.

Examples of the thermoplastic resins include a polyamide resin, a polyethylene terephthalate resin, a polybutylene terephthalate resin, a polycarbonate resin, a urethane resin, a polypropylene resin, a polyethylene resin, a polystyrene resin, an acrylic resin, a polybutadiene resin, a polyisoprene resin, and those obtained by modifying these resins by copolymerization or the like. Further, these thermoplastic resins can be used individually or in combination.

Examples of the polymerization inhibitors include hydroquinone, trimethylhydroquinone, p-t-butylcatechol, t-butylhydroquinone, toluhydroquinone, p-benzoquinone, naphthoquinone, hydroquinone monomethyl ether, phenothiazine, copper naphthenate, and copper chloride. These polymerization inhibitors can be used individually or in combination.

Examples of the curing accelerators include metallic soaps, such as cobalt naphthenate, cobalt 2-ethylhexanoate, vanadyl 2-ethylhexanoate, copper naphthenate, and barium naphthenate; and metal chelate compounds, such as vanadyl acetylacetate, cobalt acetylacetate, and iron acetylacetonate. Further, examples of amine compounds include N,N-dimethylamino-p-benzaldehyde, N,N-dimethylaniline, N,N-diethylaniline, N,N-dimethyl-p-toluidine, N-ethyl-m-toluidine, triethanolamine, m-toluidine, diethylenetriamine, pyridine, phenylmorpholine, piperidine, and diethanolaniline. These curing accelerators can be used individually or in combination.

Examples of the fillers include inorganic compounds and organic compounds, and they can be used for controlling physical properties of the molded article, such as a strength, a modulus, an impact strength, and a fatigue endurance. These fillers can be used individually or in combination.

Examples of the inorganic compounds include calcium carbonate, magnesium carbonate, barium sulfate, mica, talc, kaolin, clay, Celite, asbestos, bayerite, baryta, silica, silica sand, dolomite limestone, gypsum, an aluminum fine powder, a hollow balloon, alumina, a glass powder, aluminum hydroxide, white marble, zirconium oxide, antimony trioxide, titanium oxide, molybdenum dioxide, and an iron powder.

Examples of the organic compounds include natural polysaccharide powders, such as cellulose and chitin, and synthetic resin powders, and, as the synthetic resin powder, a powder of an organic material comprised of a hard resin, a soft rubber, an elastomer, a polymer (copolymer) or the like, or particles having a multilayer structure of a core/shell type or the like can be used. Specifically, there can be mentioned particles comprised of a butadiene rubber and/or an acrylic rubber, a urethane rubber, a silicone rubber, or the like, a polyimide resin powder, a fluororesin powder, and a phenolic resin powder.

Examples of the release agents include zinc stearate, calcium stearate, a paraffin wax, a polyethylene wax, and a carnauba wax. Preferred examples include a paraffin wax, a polyethylene wax, and a carnauba wax. These release agents can be used individually or in combination.

The resin composition for VaRTM of the invention is obtained by mixing the radically curable resin (A), the unsaturated monomer (B), the polymerization initiator (C), and optionally another component.

Further, with respect to the viscosity of the resin composition for VaRTM of the invention, from the viewpoint of further improving the time for injecting the resin composition into a mold for molding and the impregnation properties of a carbon fiber with the resin composition, the viscosity at 25°C is in the range of 30 to 2,000 mPa•s, preferably in the range of 50 to 1,000 mPa•s.

The molded article of the invention contains the above-mentioned resin composition for VaRTM, and a carbon fiber reinforcing material (D).

With respect to the content of the carbon fiber reinforcing material (D) in the molded article of the invention, from the viewpoint of further improving the mechanical physical properties of the obtained molded article, the content of the carbon fiber reinforcing material (D) is preferably in the range of 30 to 70% by volume, more preferably in the range of 45 to 65% by volume. When the carbon fiber content is low, there is a possibility that a molded article having a high strength cannot be obtained, and, when the carbon fiber content is high, the impregnation properties of a fiber with the resin are unsatisfactory such that a blister can be caused in the molded article, and thus there is a possibility that a molded article having a high strength cannot be obtained.

The carbon fiber reinforcing material (D) is comprised solely of a carbon fiber, or comprised of a combination of a carbon fiber and, if necessary, further an inorganic fiber, such as a glass fiber, an organic fiber, or the like.

With respect to the carbon fiber, various types of carbon fibers, such as polyacrylonitrile, pitch, and rayon carbon fibers, can be used, but, of these, a polyacrylonitrile carbon fiber is preferred because a carbon fiber having a high strength can be easily obtained.

With respect to the form of the carbon fiber reinforcing material (D), the carbon fiber reinforcing material may be used in the form of unidirectional fabric obtained by unifying a carbon fiber having the fiber direction paralleled in almost the same direction using an auxiliary weft yarn, a binder or the like, bidirectional fabric obtained by bidirectionaly interlacing at least a carbon fiber, multi-axial fabric obtained by multi-directionally interlacing a carbon fiber, or a multi-axial stitched substrate obtained by multi-directionally laminating sheets of a carbon fiber unidirectionally paralleled and unifying them using a stitch yarn, or in the form of a braid, or nonwoven fabric or mat using a discontinuous fiber, and further the carbon fiber reinforcing material may be used as a preform obtained by laminating and shaping a fiber and fixing the resultant form by means of a binder, stitching or the like.

The molded article of the invention may be obtained using a known VaRTM method. For example, the molded article of the invention may be obtained by a method including: reducing, to 10 kPa or less, the pressure in a mold where the carbon fiber reinforcing material (D) is shaped; injecting the resin composition for VaRTM into the mold, optionally under a pressure of 100 kPa to 12 MPa, while the mold temperature is increased to 60 to 150°C by heating for the purpose of increasing the productivity, so that the carbon fiber reinforcing material (D) is impregnated with the resin composition; and curing the resin composition for 1 to 120 minutes, which is followed by demolding.

The molded article obtained from the resin composition for VaRTM of the invention has excellent appearance, flexural strength, flexural modulus and the like, and therefore can be advantageously used in automotive members, railway rolling stock members, aerospace and aircraft members, vessel members, house building members, sports goods members, lightweight vehicle members, construction and civil engineering members, and housings for OA machines and the like.

### Examples

Hereinbelow, the present invention will be descried in more detail with reference to the following specific Examples (of which Examples 3 and 4 are not according to the invention).

### (Synthesis Example 1: Synthesis of epoxy methacrylate (A-1))

Into a 2-L flask equipped with a thermometer, a nitrogen gas introducing pipe, and a stirrer were charged 677 parts by mass of an epoxy resin ("EPICLON 850", manufactured by DIC Corporation; bisphenol A epoxy resin; epoxy equivalent: 188), 310 parts by mass of methacrylic acid, and 0.29 part by mass of t-butylhydroquinone, and the temperature was elevated to 90°C under a flow of 1:1 mixed gas of nitrogen and air. 0.60 part by mass of 2-methylimidazole was added to the resultant mixture, and the temperature was elevated to 110°C and a reaction was conducted for 10 hours, so that the acid value became 6 or less, completing the reaction. After cooling to about 60°C, the resultant reaction mixture was removed from the reaction vessel, obtaining epoxy methacrylate (A-1).

### (Example 1: Preparation of a resin composition (1) for VaRTM and evaluation)

Into 100 parts by mass of a resin solution, which had been obtained by dissolving 45 parts by mass of the epoxy methacrylate (A-1) obtained in Synthesis Example 1 in 55 parts by mass of phenoxyethyl methacrylate (boiling point under atmospheric pressure: 260°C), were mixed 0.1 part by mass of 6% cobalt 2-ethylhexanoate and 1 part of a polymerization initiator ("Kayaester O-50E", manufactured by Kayaku Akzo Corporation; organic peroxide; hereinafter, referred to simply as "polymerization initiator (C-1)") to obtain a resin composition (1) for VaRTM. The resin composition (1) for VaRTM had a viscosity of 200 mPa•s.

### [Production of a molded article (1)]

On a mold surface (400 mm × 400 mm) which can be heated and controlled in temperature were arranged 8-ply 250 mm × 250 mm carbon fiber reinforcing material ("TR3110MS", manufactured by Mitsubishi Rayon Co., Ltd.; plain weave cloth of 3K carbon fiber tow having a filament diameter of 7 µm; 200 g/m²) and a φ 6 mm spiral tube as a resin feed line and a vacuum line, and these were covered with a peel ply ("BleederLeaseB", manufactured by AIRTECH Japan, Ltd.), flow media ("Greenflow75", manufactured by AIRTECH Japan, Ltd.), and a bagging film ("KM1300", manufactured by AIRTECH Japan, Ltd.) in this order, and the edge of the bagging film, the mold surface, and the resin feed and vacuum hoses were sealed using a sealing tape ("AT-200Y", manufactured by AIRTECH Japan, Ltd.). The resin feed hose had a length such that the hose reached the bottom of a resin tank. Further, the vacuum hose was connected to a vacuum pump through a vacuum gauge.

The resin feed hose before the resin tank was blocked using vise pliers, and the vacuum pump was operated, and the airtightness between the mold and the bagging film was checked using the vacuum gauge and maintained at 10 kPa or less.

While maintaining the above-mentioned degree of vacuum, the mold temperature was elevated to 90°C, and 300 g of the resin composition (1) for VaRTM was transferred to the resin tank.

The vise pliers for the resin feed hose were released, and injection of the resin into the carbon fiber reinforcing material between the mold and the film was started. After about 5 minutes, injection of the resin into the entire surface of the carbon fiber reinforcing material was ended, and the resin feed hose and vacuum hose were blocked using vise pliers. The resultant carbon fiber reinforcing material was cured at a mold temperature of 90°C for 60 minutes to obtain a molded article (1). The obtained molded article (1) had a thickness of 2.0 mm and a carbon fiber content of 50.5% by volume.

### [Evaluation of moldability (appearance)]

With respect to the above-obtained molded article (1), the appearance was visually evaluated in accordance with the following criteria.
○: Unimpregnated portion or foaming is not found.
△: Unimpregnated portion or foaming is found.
×: Unimpregnated portion or foaming is found on the entire surface.

### [Evaluation of flexural strength and flexural modulus]

With respect to the above-obtained molded article (1), a three-point flexural test was conducted in accordance with JIS K7074-1988 to measure a flexural strength and a flexural modulus.

### [Evaluation of Barcol hardness]

With respect to the above-obtained molded article (1), a Barcol hardness was measured by GYZJ934-1 in accordance with JIS K7060-1995.

### (Example 2: Preparation of a resin composition (2) for VaRTM and evaluation)

Into 100 parts by mass of a resin solution, which had been obtained by dissolving 55 parts by mass of the epoxy methacrylate (A-1) obtained in Synthesis Example 1 in 45 parts by mass of benzyl methacrylate (boiling point under atmospheric pressure: 210°C), were mixed 0.1 part by mass of 6% cobalt 2-ethylhexanoate and 1 part of a polymerization initiator (C-1) to obtain a resin composition (2) for VaRTM. The resin composition (2) for VaRTM had a viscosity of 170 mPa•s.

A molded article (2) was prepared in accordance with substantially the same procedure as in Example 1 except that the resin composition (1) for VaRTM used in Example 1 was changed to the resin composition (2) for VaRTM, and the evaluations were performed.

### (Example 3: Preparation of a resin composition (3) for VaRTM and evaluation; not according to the invention)

Into 100 parts by mass of a resin solution, which had been obtained by dissolving 50 parts by mass of the epoxy methacrylate (A-1) obtained in Synthesis Example 1 in 50 parts by mass of dicyclopentenyloxyethyl methacrylate (boiling point under atmospheric pressure: 359°C), were mixed 0.1 part by mass of 6% cobalt 2-ethylhexanoate and 1 part of a polymerization initiator (C-1) to obtain a resin composition (2) for VaRTM. The resin composition (3) for VaRTM had a viscosity of 1,250 mPa•s.

A molded article (3) was prepared in accordance with substantially the same procedure as in Example 1 except that the resin composition (1) for VaRTM used in Example 1 was changed to the resin composition (3) for VaRTM, and the evaluations were performed.

### (Example 4: Preparation of a resin composition (4) for VaRTM and evaluation; not according to the invention)

Into 100 parts by mass of a resin solution, which had been obtained by dissolving 50 parts by mass of the epoxy methacrylate (A-1) obtained in Synthesis Example 1 in 50 parts by mass of ethylene glycol dimethacrylate (boiling point under atmospheric pressure: 260°C), were mixed 0.1 part by mass of 6% cobalt 2-ethylhexanoate and 1 part of a polymerization initiator (C-1) to obtain a resin composition (4) for VaRTM. The resin composition (4) for VaRTM had a viscosity of 130 mPa•s.

A molded article (4) was prepared in accordance with substantially the same procedure as in Example 1 except that the resin composition (1) for VaRTM used in Example 1 was changed to the resin composition (4) for VaRTM, and the evaluations were performed.

### (Comparative Example 1: Preparation of a resin composition (R1) for VaRTM and evaluation)

A resin composition (R1) for VaRTM was obtained in accordance with substantially the same procedure as in Example 2 except that 45 parts by mass of benzyl methacrylate used in Example 2 was changed to 45 parts by mass of styrene (boiling point under atmospheric pressure: 145°C). The resin composition (R1) for VaRTM had a viscosity of 50 mPa•s.

A molded article (R1) was prepared in accordance with substantially the same procedure as in Example 1 except that the resin composition (1) for VaRTM used in Example 1 was changed to the resin composition (R1) for VaRTM, and the evaluations were performed.

### (Comparative Example 2: Preparation of a resin composition (R2) for VaRTM and evaluation)

A resin composition (R2) for VaRTM was obtained in accordance with substantially the same procedure as in Example 2 except that 45 parts by mass of benzyl methacrylate used in Example 2 was changed to 45 parts by mass of methyl methacrylate (boiling point under atmospheric pressure: 101°C). The resin composition (R1) for VaRTM had a viscosity of 40 mPa•s.

A molded article (R2) was prepared in accordance with substantially the same procedure as in Example 1 except that the resin composition (1) for VaRTM used in Example 1 was changed to the resin composition (R2) for VaRTM, and the evaluations were performed.

The results of the evaluations with respect to the above-obtained resin compositions (1) to (4), (R1), and (R2) for VaRTM are shown in Table 1.

**[Table 1]**

| Table 1 | Example 1 | Example 2 | Example 3* | Example 4* | Comparative Example 1 | Comparative Example 2 |
|---|---|---|---|---|---|---|
| Resin composition for VaRTM | (1) | (2) | (3) | (4) | (R1) | (R2) |
| Radically polymerizable resin (A) | Epoxy methacrylate (A-1) | Epoxy methacrylate (A-1) | Epoxy methacrylate (A-1) | Epoxy methacrylate (A-1) | Epoxy methacrylate (A-1) | Epoxy methacrylate (A-1) |
| Unsaturated monomer (B) | Phenoxyethyl methacrylate | Benzyl methacrylate | Dicyclopentenyl -oxyethyl methacrylate | Ethylene glycol dimethacrylate | Styrene | Methyl methacrylate |
| Boiling point (°C) | 260 | 210 | 359 | 260 | 145 | 101 |
| Polymerization initiator (C) | (C-1) | (C-1) | (C-1) | (C-1) | (C-1) | (C-1) |
| Mass ratio ((A)/(B)) | 45/55 | 55/45 | 50/50 | 65/35 | 55/45 | 55/45 |
| Moldability (Appearance of molded article) | ○ | ○ | ○ | ○ | △ | × |
| Flexural strength (MPa) of molded article | 778 | 788 | 667 | 658 | Evaluation impossible | Evaluation impossible |
| Flexural modulus (GPa) of molded article | 51 | 51 | 47 | 49 | Evaluation impossible | Evaluation impossible |
| Barcol hardness | 70 | 70 | 67 | 69 | 0 | 0 |

| | | | | | | |
|---|---|---|---|---|---|---|
| * not according to the invention | | | | | | |

It has been found that the resin compositions for VaRTM in Examples 1 to 4 have excellent moldability, and the molded articles obtained from them have excellent flexural strength, flexural modulus and Barcol hardness.

On the other hand, in Comparative Example 1 that is an example in which styrene having a boiling point of lower than 200°C was used as an unsaturated monomer, when injecting the resin under a reduced pressure, the monomer in the resin boiled, so that unimpregnation or a curing failure was caused in part of the molded article. For this reason, the evaluation of flexural strength and flexural modulus could not be made.

In Comparative Example 2 that is an example in which methyl methacrylate having a boiling point of lower than 200°C was used as an unsaturated monomer, when injecting the resin under a reduced pressure, the monomer in the resin boiled, so that unimpregnation or a curing failure was caused in the entire surface of the molded article. For this reason, the evaluation of flexural strength and flexural modulus could not be made.

## Claims

1. A resin composition for VaRTM, comprising: a radically curable resin (A); an unsaturated monomer (B) having a boiling point of 200°C or higher under atmospheric pressure; and a polymerization initiator (C),
wherein the mass ratio (A)/(B) of the radically curable resin (A) to the unsaturated monomer (B) is in the range of 30/70 to 70/30,
wherein the resin composition has a viscosity at 25°C in the range of 30 to 2,000 mPa•s, and
wherein the unsaturated monomer (B) is phenoxyethyl methacrylate and/or benzyl methacrylate.

2. A molding material comprising: the resin composition for VaRTM according to claim 1; and a carbon fiber reinforcing material (D).

3. A molded article comprising a cured product of the molding material according to claim 2.

4. A method for producing a molded article, the method comprising injecting the resin composition for VaRTM according to claim 1 into a mold for molding in a state where the pressure in the mold is 10 kPa or less and the mold temperature is 60 to 150°C to impregnate a carbon fiber reinforcing material (D) with the resin composition.

## Patentansprüche

1. Harzzusammensetzung für VaRTM, umfassend: ein radikalisch härtbares Harz (A); ein ungesättigtes Monomer (B) mit einem Siedepunkt von 200°C oder höher unter atmosphärischem Druck; und einen Polymerisationsinitiator (C),
wobei das Massenverhältnis (A)/(B) des radikalisch härtbaren Harzes (A) zu dem ungesättigten Monomer (B) im Bereich von 30/70 bis 70/30 liegt,
wobei die Harzzusammensetzung eine Viskosität bei 25°C im Bereich von 30 bis 2.000 mPa•s aufweist, und
wobei das ungesättigte Monomer (B) Phenoxyethylmethacrylat und/oder Benzylmethacrylat ist.

2. Formmasse, umfassend: die Harzzusammensetzung für VaRTM gemäß Anspruch 1; und ein Kohlenstofffaser-Verstärkungsmaterial (D).

3. Geformter Gegenstand, der ein gehärtetes Produkt aus der Formmasse nach Anspruch 2 umfasst.

4. Verfahren zur Herstellung eines geformten Gegenstands, wobei das Verfahren das Einspritzen der Harzzusammensetzung für VaRTM gemäß Anspruch 1 in eine Form zum Formen in einem Zustand umfasst, in dem der Druck in der Form 10 kPa oder weniger und die Formtemperatur 60 bis 150°C beträgt, um ein Kohlenstofffaser-Verstärkungsmaterial (D) mit der Harzzusammensetzung zu imprägnieren.

## Revendications

1. Composition de résine pour VaRTM, comprenant : une résine à durcissement radical (A) ; un monomère insaturé (B) ayant un point d'ébullition de 200°C ou plus sous pression atmosphérique ; et un initiateur de polymérisation (C),
dans laquelle le rapport massique (A)/(B) de la résine à durcissement radical (A) au monomère insaturé (B) est compris entre 30/70 et 70/30,
dans laquelle la composition de résine a une viscosité à 25°C comprise entre 30 et 2 000 mPa•s, et
dans laquelle le monomère insaturé (B) est le méthacrylate de phénoxyéthyle et/ou le méthacrylate de benzyle.

2. Matériau de moulage comprenant : la composition de résine pour VaRTM selon la revendication 1 ; et un matériau de renforcement en fibre de carbone (D).

3. Article moulé comprenant un produit durci du matériau de moulage selon la revendication 2.

4. Procédé de fabrication d'un article moulé, comprenant l'injection de la composition de résine pour VaRTM selon la revendication 1 dans un moule pour le moulage dans un état où la pression dans le moule est de 10 kPa ou moins et la température du moule est de 60 à 150°C pour imprégner un matériau de renforcement en fibre de carbone (D) avec la composition de résine.
